(19) Europäisches Patentamt
European Patent Office
Office européen des brevets

(11) **EP 3 391 003 B1**

(12) **EUROPEAN PATENT SPECIFICATION**

(45) Date of publication and mention of the grant of the patent:
**22.07.2020 Bulletin 2020/30**

(21) Application number: **16876354.8**

(22) Date of filing: **28.11.2016**

(51) Int Cl.:
***G01L 27/00*** *(2006.01)*

(86) International application number:
**PCT/US2016/063831**

(87) International publication number:
**WO 2017/105814 (22.06.2017 Gazette 2017/25)**

(54) **PRESSURE SENSOR DRIFT DETECTION AND CORRECTION**

DRIFTERKENNUNG UND KORREKTUR BEI EINEM DRUCKSENSOR

DÉTECTION ET CORRECTION DE DÉRIVE DE CAPTEUR DE PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2015 US 201514969331**

(43) Date of publication of application:
**24.10.2018 Bulletin 2018/43**

(73) Proprietor: **Honeywell International Inc.**
**Morris Plains, NJ 07950 (US)**

(72) Inventors:
• **KASTELEIN, Bas**
**Morris Plains**
**New Jersey 07950 (US)**
• **SAI, Bin**
**Morris Plains**
**New Jersey 07950 (US)**
• **HERSHEY, George**
**Morris Plains**
**New Jersey 07950 (US)**

(74) Representative: **Houghton, Mark Phillip**
**Patent Outsourcing Limited**
**1 King Street**
**Bakewell, Derbyshire DE45 1DZ (GB)**

(56) References cited:
| | |
|---|---|
| WO-A1-2015/003856 | WO-A1-2015/003856 |
| US-A1- 2006 070 448 | US-A1- 2006 278 005 |
| US-A1- 2008 006 094 | US-A1- 2012 006 119 |
| US-A1- 2014 165 692 | US-A1- 2014 278 185 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This disclosure is generally directed to pressure sensing for industrial applications. More specifically, this disclosure is directed to an apparatus and method for pressure sensor drift detection and correction.

**BACKGROUND**

Pressure sensing for industrial applications has widely been used. High accuracy and stability however is still a challenge because the measuring environment conditions can vary significantly. For example, process pressure ranging up to 10,000 pounds per square inch (psi) and process temperature ranging from -40 °C to +85 °C hinder temperature independence and drift free performance of a pressure sensor. Variation of the measuring environment conditions creates measurement errors such as temperature or drift effects that reduce the accuracy and stability of the sensor. Temperature or drift effects require re-calibration and maintenance efforts which incur downtime of operation and extra costs.

US20140165692A1 discloses an online method for reconfiguring pressure and position sensors in a hydraulic system. In one step, a sensor drift condition, a recalibration request, or an unisolated fault condition is detected. In another step, a system pressure sensor or another sensor, such as a load-sense pressure sensor, is verified as a trusted master reference sensor. Another step includes measuring and recording a first pressure reading at the master reference sensor and first voltage readings associated with first, second, third, and fourth pressure slave sensors at a first pump pressure set point. Another step includes, repeating the previous step at a second pump pressure set point. A new gain and offset for each of the first, second, third, and fourth pressure sensors can be calculated based on a comparison of the recoded first and second pressure readings and the recorded first and second voltage readings.

**SUMMARY**

The present invention in its various aspcts is as set out in the appended claims. This disclosure provides an apparatus and method for pressure sensor drift detection and correction.

In a first example, a method includes generating, by at least one pressure sensor, a first signal in response to sensing a process. The method includes generating, by the at least one pressure sensor, a second signal in response to sensing a drift detection condition different from the process. The method includes determining a pressure measurement of the process using the first signal. The method includes determining a pressure measurement of the drift detection condition using the second signal. The method includes comparing the pressure measurement of the drift detection condition to one of: the pressure measurement of the process or a reference value. The method includes identifying, by at least one processing device, whether drift has deteriorated accuracy of the at least one pressure sensor based on the comparison.

In a second example, a system includes at least one pressure sensor that is configured to generate a first signal in response to sensing a process and generate a second signal in response to sensing a drift detection condition different from the process. The system includes at least one processing device that is configured to determine a pressure measurement of the process using the first signal, and determine a pressure measurement of the drift detection condition using the second signal. The at least one processing device is configured to compare the pressure measurement of the drift detection condition to one of: the pressure measurement of the process or a reference value. The at least one processing device is configured to identify whether drift has deteriorated accuracy of the at least one pressure sensor based on the comparison.

In a third example, an apparatus includes at least one processing device that is configured to receive first and second signals from at least one pressure sensor, the first signal indicating a pressure from sensing a process. The second signal indicates a pressure from sensing a drift detection condition different from the process. The at least one processing device is configured to determine a pressure measurement of the process using the first signal. The at least one processing device is configured to determine a pressure measurement of the drift detection condition using the second signal. The at least one processing device is configured to compare the pressure measurement of the drift detection condition to one of: the pressure measurement of the process or a reference value. The at least one processing device is configured to identify whether drift has deteriorated accuracy of the at least one pressure sensor based on the comparison

Other technical features may be readily apparent to one skilled in the art from the following figures, descriptions, and claims.

**BRIEF DESCRIPTION OF THE DRAWINGS**

For a more complete understanding of this disclosure and its features, reference is now made to the following description, taken in conjunction with the accompanying drawings, in which:

FIGURES 1-7B illustrate various embodiments of a pressure sensor system with dynamic drift detection and compensation according to the present disclosure;
FIGURE 8 illustrates an example method of dynamic drift detection and compensation using a dual absolute pressure sensor according to embodiments of the present disclosure;
FIGURE 9 illustrates a method of dynamic drift detection and compensation using single pressure sensor according to embodiments of the present disclosure;
FIGURE 10 illustrates a method of dynamic drift detection and compensation using a drift-free sensor according to embodiments of the present disclosure; and
FIGURES 11A, 11B, and 11C illustrate examples of the processing circuitry of FIGURE 1 according to embodiments of the present disclosure.

**DETAILED DESCRIPTION**

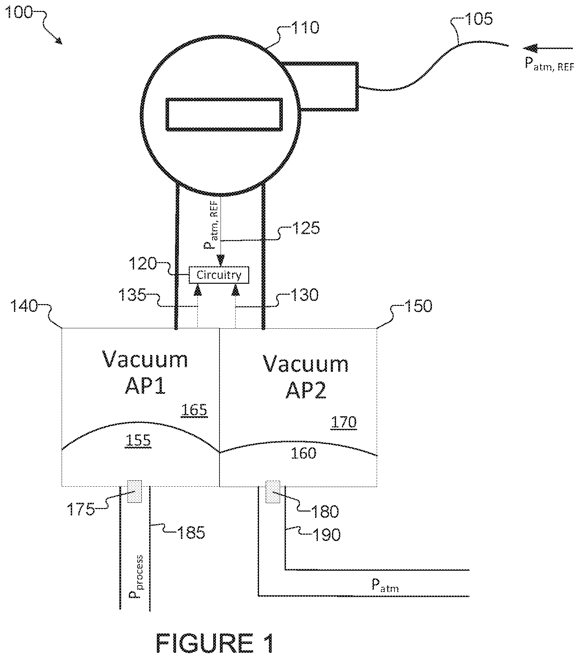

FIGURES 1 through 11C, discussed below, and the various examples used to describe the principles of the present invention in this patent document are by way of illustration only and should not be construed in any way to limit the scope of the invention. Those skilled in the art will understand that the principles of the present invention may be implemented in any suitable manner and in any type of suitably arranged device or system.

FIGURES 1-7B illustrate various embodiments of a pressure sensor system with dynamic drift detection and compensation according to the present disclosure. Each of the various embodiments of the pressure sensor system with dynamic drift detection and compensation provides real-time error detection and compensation in order to provide temperature independent and drift free performance in a range of measuring environmental conditions.

FIGURE 1 illustrates an example dual absolute pressure (AP) sensor with dynamic drift detection and compensation system 100 according to embodiments of the present disclosure.

The dual AP sensor system 100 receives a reference atmospheric pressure measurement ($P_{atm_{ref}}$) from a control room through field wiring 105. For example, the dual AP sensor system 100 receives the reference atmospheric pressure measurement from the control room at regular intervals (e.g., every 30 minutes). The atmospheric pressure is constant throughout the plant, and the reference atmospheric pressure measurement is measured by an extremely accurate reference sensor that is calibrated regularly and that is disposed in the plant.

The dual AP sensor system 100 includes an electronics housing 110, signal processing circuitry 120, and a meter body. The electronics housing 110 forms an enclosure for the signal processing circuitry 120 or any additional signal processing electronics. The electronics housing 110 connects to the field wiring 105, enabling the dual AP sensor system 100 to receive data (e.g., $P_{atm_{ref}}$) from an external device through the field wiring 105. More particularly, the electronics housing 110 enables the enclosed processing circuitry 120 to receive data 125 from the field wiring 105. The electronics housing 110 attaches to the meter body.

The processing circuitry 120 could, for instance, include at least one processor, microprocessor, microcontroller, field programmable gate array (FPGA), application specific integrated circuit (ASIC), or other processing or control device. In certain embodiments, the processing circuitry 120 includes executable instructions stored in a machine-usable, computer-usable, or computer-readable medium in any of a variety of forms, wherein the instructions, when executed, cause the processing circuitry to perform pressure sensor dynamic drift detection and compensation. That is, the processing circuitry 120 is configured to determine the pressure ($P_{Process}$) of an industrial process using the data 125 and pressure sensor measurements from the meter body. The processing circuitry 120 receives data 125 from an external device (e.g., device within a control room) that is coupled to the electronics housing 110, For example, the data 125 can include the reference atmospheric pressure measurement ($P_{atm_{ref}}$). The processing circuitry 120 also receives pressure sensor signals from the meter body through at least one communication interface 130, 135. For each pressure sensor signal received from the meter body, the processing circuitry 120 can determine a pressure measurement by using that received pressure sensor signal. The processing circuitry 1 20 can compare the determined pressure measurement to another determined pressure measurement or to the reference atmospheric pressure measurement ($P_{atm_{ref}}$). As described in more detail below, the processing circuitry 120 identifies whether drift has deteriorated accuracy of a pressure sensor based on the comparison. Further, the processing circuitry 120 obtains a corrected pressure measurement of the industrial process (namely, a drift-free true pressure measurement) by compensating deteriorated accuracy of the pressure sensor_by a drift correction value.

The meter body of the dual AP sensor system 100 connects to an industrial process and sends pressure sensor signals to the processing circuitry 120 indicating a detected pressure ($P_{Process}$) of the industrial process or a detected

atmospheric pressure ($P_{atm}$) within the plant. The meter body of the dual AP sensor system 100 includes at least one sensor, such as the first AP sensor 140 that detects the pressure ($P_{Process}$) of the industrial process and the second AP sensor 150 that detects atmospheric pressure ($P_{atm}$) within the plant. The meter body also includes a membrane 175, 180 per sensor, and each membrane allows the sensor to detect pressure without exposing internal components of the sensor to potentially damaging fluids within the industrial process or plant atmosphere.

The first AP sensor 140 and second AP sensor 150 can be identical to each other. Each AP sensor 140, 150 includes a pressure sensitive material 155, 160 in a vacuum 165, 170 and a sensing element. The pressure sensitive material 155, 160 is configured to deform in response to an applied pressure. The sensing element (for example, piezoresistor) is configured to generate a signal in response to the deformation of the pressure sensitive material 155, 160, wherein the generated signal indicates the amount of applied pressure. The sensing element is electrically coupled to the processing circuitry 120 via a communication interface 130, 135 to send the generated signal to the processing circuitry 120, enabling a determination of a pressure measurement corresponding to the generated signal. Depending on which condition is sensed by the AP sensor, the signal generated by its sensing element can be used by the processing circuitry 120 to determine a pressure measurement ($P_{process}$) of the process or a pressure measurement of the drift detection condition. As both AP sensors 140, 150 are composed from the same wafer, it is reasonable to conclude that both AP sensors 140, 150 exhibit the same drift characteristic, as expressed by Equation 1.

$$drift\,1 = drift2 \qquad (1)$$

Over the life of the dual AP sensor system 100, drift deteriorates the accuracy of the AP sensors 140, 150. Plant operators and other personnel depend on the accuracy of measurements of the pressure ($P_{Process}$) of the industrial process to make safety decisions or to adjust parameters within the industrial process. Throughout its life, the dual AP sensor system 100 dynamically detects drift by repeatedly (e.g., periodically) or continuously measuring an amount of drift within the second AP sensor 150, as expressed by Equation 2. The drift ($drift2$) within the second AP sensor 150 is expressed by a difference between the pressure measurements of the same stimulus or drift detection condition (namely, the plant atmosphere) by the second AP sensor 150 and by a reference sensor known to be accurate.

$$drift2 = AP2 - P_{atm_{ref}} \qquad (2)$$

The drift within the second AP sensor 150 informs the processing circuitry 120 of an amount of inaccuracy of the measurements from the first AP sensor 140. Accordingly, the dual AP sensor system 100 can compensate for the drift characteristic within the first AP sensor 140 by adjusting the pressure measurement (AP1) of the first AP sensor 140 using a drift correction value. Equation 3 expresses that a corrected process pressure measurement (AP(true)) can be obtained by subtracting the drift correction value from the pressure measurement (AP1) of the first AP sensor 140. In this example, the drift correction value is represented by the drift ($drift2$) within the second AP sensor 150.

$$AP(true) = AP1 - drift2 \qquad (3)$$

The first AP sensor 140 is connected to an industrial process through the membrane 175 and pipe 185. Accordingly, the pressure sensor signal generated by the first AP sensor 140 represents the pressure ($P_{Process}$) of the industrial process relative to the pressure of the vacuum 165. Similarly, the second AP sensor 150 is connected to the plant atmosphere through the membrane 180 and pipe 190. The pressure sensor signal generated by the second AP sensor 150 represents the atmospheric pressure ($P_{atm}$) within the plant relative to the vacuum 170. In the specific example shown, the deformation (shown by a higher arc) of the pressure sensitive material 155 within the first AP sensor 140 is greater than the deformation of the pressure sensitive material 160 within the second AP sensor 150, which indicates that the pressure ($P_{Process}$) of the industrial process is greater than the atmospheric pressure ($P_{atm}$) within the plant.

In certain embodiments of the dual AP sensor system 100, the second AP sensor 150 can be calibrated over the temperature range of the plant in order to accurately measure the detected atmospheric pressure ($P_{atm}$) within the plant, so the temperature dependent hysteresis residual errors can be included in the drift correction. Accordingly, stability can be achieved while using reduced specifications (for example, reduced drift resistance) to lower costs of the AP sensors 140, 150 because the dual AP sensor system 100 is dynamically calibrated. An increase in cost that results from including a double sensor (as opposed to a single sensor) in the meter body is diminished by the reduction in costs attributable to including less stable sensors. That is, although each constituent AP sensor 140, 150 may be less stable and thus less costly to acquire (compared to non-reduced specification AP sensors), this does not reduce the sensor stability of the dual AP sensor system 100 because processing circuitry 120 implements the dynamic drift detection and compensation to maintain accuracy of pressure measurements even while sensors exhibit drift.

Although FIGURE 1 illustrates one example of a dual AP sensor system 100 with dynamic drift detection and compensation, various changes may be made to FIGURE 1. For example, the relative sizes, shapes, and dimensions of the various components shown in FIGURE 1 are for illustration only. Each component in FIGURE 1 could have any other size, shape, and dimensions.

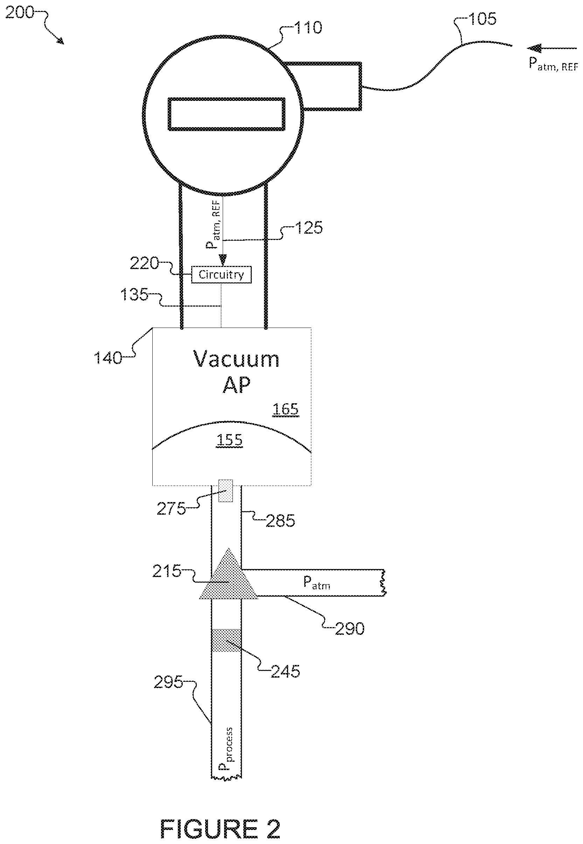

FIGURE 2 illustrates an example single absolute pressure (AP) sensor system 200 with dynamic drift detection and compensation according to embodiments of the present disclosure.

The single AP sensor system 200 includes an electronics housing 110, signal processing circuitry 220 enclosed within the electronics housing 110, and a meter body. That is, the single AP sensor system 200 includes some components that are the same as or similar to the components used in the dual AP sensor system 100 of FIGURE 1. The field wiring 105, electronics housing 110, communication interface 135, and the AP sensor 140 (including its sensing element and pressure sensitive material 155 in the vacuum 165) of FIGURE 1 could be used with the single AP sensor system 200 of FIGURE 2. These components 105, 110, 135, 140, 155, 165 can operate in the same or similar manner as described above. For example, the electronics housing 110 enables an enclosed processing circuitry 220 to receive data 125 from the field wiring 105. Accordingly, a detailed description of these components 105, 110, 135, 140, 155, 165 will not be duplicated in reference to FIGURE 2.

The meter body of the single AP sensor system 200 connects to an industrial process and sends pressure sensor signals to the processing circuitry 220 indicating a detected pressure ($P_{Process}$) of the industrial process or a detected atmospheric pressure ($P_{atm}$) within the plant. The meter body of the single AP sensor system 200 includes a valve 215, a pressure reducer 245 (i.e., a stable passive device that does not drift) for aligning a dynamic range, a membrane 275, and pipe members 285, 290, 295 each connected to the valve 215. The AP sensor 140 is connected to an environment (i.e., the industrial process or the plant atmosphere) through the membrane 275 and the pipe member 285. The membrane 275 allows the AP sensor 140 to detect pressure without exposing internal components of the AP sensor 140 to potentially damaging fluids within the industrial process or plant atmosphere.

The mode of the valve 215 controls which environment is exposed to the AP sensor 140 through the membrane 275, enabling the AP sensor 140 to sense the pressure of that environment. The valve 215 is controlled by the processing circuitry 220, which selects the mode of the valve 215. The valve 215 can include a switch-operated valve, such as a microelectromechanical systems (MEMS) microvalve. The valve 215 can be considered to have two inputs and one output. In a closed mode, the two inputs are closed to isolate the AP sensor 140, membrane 175, and pipe member 285 from environments within the pipe members 290 and 295. In a process measuring state of the valve 215, the input corresponding to the pipe member 295 is open, and the input corresponding to the pipe member 290 is closed. Accordingly, in a process measuring mode of the valve 215, the AP sensor 140 senses the pressure ($P_{Process}$) of the industrial process through the pipe members 285 and 295. In a drift detection mode of the valve 215, the input corresponding to the pipe member 295 is closed, and the input corresponding to the pipe member 290 is open. Accordingly, the AP sensor 140 senses the atmospheric pressure ($P_{atm}$) within the plant through the pipe members 285 and 290.

The pipe member 285 is connected to both other pipe members 290 and 295 through the valve 215, which opens up the pipe member 285 to a selected environment. More particularly, the environment, which the valve 215 opens up to the pipe member 285, is either the industrial process or a drift detection condition, thereby enabling the AP sensor 140 to sense the pressure of one or the other. The pipe member 290 is connected to the plant atmosphere to enable the AP sensor 140 to sense the atmospheric pressure ($P_{atm}$) within the plant, namely, the drift detection condition. The pipe member 295 is connected to the industrial process to enable the AP sensor 140 to sense the pressure ($P_{Process}$) of the industrial process. Each pipe member 285, 290, 295 is composed from a suitable pipe material that can operate in its designated environment. For example, the pipe member 295 can be suitable for operation in the range of volatile environments within the industrial process, the pipe member 290 can be suitable for operation in the range of atmospheric environments within the plant, and the pipe member 285 can be suitable for repeatedly switching between both environments.

The processing circuitry 220 includes executable instructions stored in a machine-usable, computer-usable, or computer-readable medium in any of a variety of forms, wherein the instructions, when executed, cause the processing circuitry to perform pressure sensor dynamic drift detection and compensation. That is, the processing circuitry 220 is configured to determine the pressure ($P_{Process}$) of the industrial process using both the data 125 and the pressure sensor measurements from the meter body through the communication interface 135. For each pressure sensor signal received from the meter body, the processing circuitry 220 can determine a pressure measurement by using that received pressure sensor signal. The processing circuitry 220 can compare the determined pressure measurement to another determined pressure measurement or to the reference atmospheric pressure measurement ($P_{atm_{ref}}$). As described in more detail below, the processing circuitry 220 identifies whether drift has deteriorated accuracy of a pressure sensor based on the comparison. Further, the processing circuitry 220 obtains a corrected pressure measurement of the industrial process (namely, a drift-free true pressure measurement) by compensating deteriorated accuracy of the pressure sensor by a drift correction value.

The processing circuitry 220 can distinguish whether a pressure sensor measurement represents the pressure ($P_{Process}$) of the industrial process or represents a detected atmospheric pressure ($P_{atm}$) within the plant. To make this distinction, the processing circuitry 220 selects the mode of the valve 215, and then determines pressure sensor measurements ($P_{process}$) of the process using signals received from the sensing element of the AP sensor 140 while the valve 215 is in the process measuring mode, and determines pressure sensor measurements ($P_{atm}$) of the plant atmosphere using signals received from the sensing element of the AP sensor 140 while the valve 215 is in the drift detection mode. To control the valve to enter the selected mode, the processing circuitry 220 generates and sends one or more switching control signals configured to cause each of the output and two inputs of the valve 215 to open or close according to the selected mode.

The processing circuitry 220 can identify that drift within the AP sensor 140 has deteriorated the accuracy of the AP sensor 140 based on a drift correction value. The drift correction value represents an amount of inaccuracy of the measurements from the AP sensor 140. The processing circuitry 220 can calculate the drift correction value according to Equation 4, wherein $AP1$ represents the pressure sensor measurement ($P_{atm}$) of the plant atmosphere using a signal received from the sensing element of the AP sensor 140 while the valve 215 is in the drift detection mode.

$$drift = AP1 - P_{atm_{ref}} \qquad (4)$$

The single AP sensor system 200 can compensate for the drift induced inaccuracy of the measurements from the AP sensor 140 by adjusting the pressure measurement ($AP1$) from the AP sensor 140 using the calculated drift correction value. For example, the processing circuitry 220 can obtain a corrected process pressure measurement ($AP(true)$) by using Equation 5, which subtracts the drift correction value ($drift$) from the pressure measurement ($AP1$) of the AP sensor 140.

$$AP(true) = AP1 - drift \qquad (5)$$

Although FIGURE 2 illustrates one example of a single AP sensor system 200 with dynamic drift detection and compensation, various changes may be made to FIGURE 2. For example, the relative sizes, shapes, and dimensions of the various components shown in FIGURE 2 are for illustration only. Each component in FIGURE 2 could have any other size, shape, and dimensions.

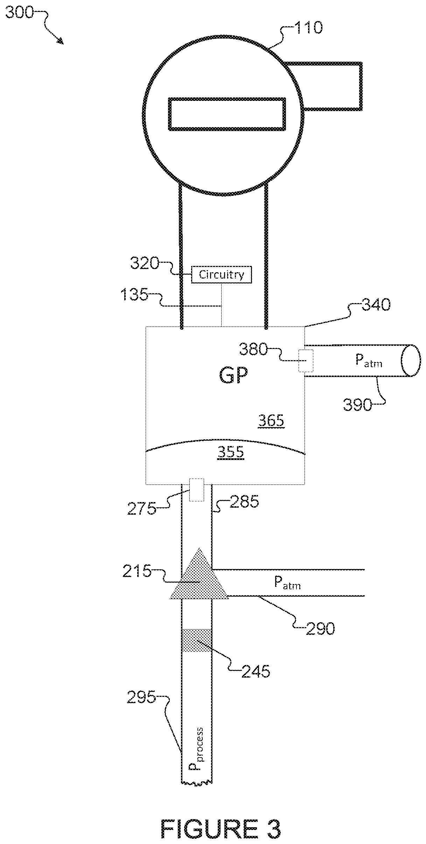

FIGURE 3 illustrates an example single gauge pressure (GP) sensor system 300 with dynamic drift detection and compensation according to embodiments of the present disclosure.

The single GP sensor system 300 includes an electronics housing 110, signal processing circuitry 320 enclosed within the electronics housing 110, and a meter body. That is, the single GP sensor system 300 includes some components that are the same as or similar to the components used in the single AP sensor system 200 of FIGURE 2. The electronics housing 110 and communication interface 135 of FIGURE 2 could be used with the single GP sensor system 300 of FIGURE 3. Additionally, the meter body components such as the valve 215, pressure reducer 245, membrane 275, and pipe members 285, 290, 295 of FIGURE 2 could be used with the single GP sensor system 300 of FIGURE 3. These components 110, 135, 215, 245, 275, 285, 290, 295 can operate in the same or similar manner as described above. For example, the electronics housing 110 forms an enclosure for the signal processing circuitry 320 and attaches to the meter body of the single GP sensor system 300. Accordingly, a detailed description of these components 110, 135, 215, 245, 275, 285, 290, 295 will not be duplicated in reference to FIGURE 3.

The meter body of the single GP sensor system 300 connects to an industrial process and sends pressure sensor signals to the processing circuitry 320 indicating a detected pressure ($P_{Process}$) of the industrial process or indicating a detected atmospheric pressure ($P_{atm}$) within the plant relative to the actual atmospheric pressure ($P_{atm}$) within the plant. The meter body of the single GP sensor system 300 also includes one GP sensor 340, which includes a pressure sensitive material 355 in a volume of air 365 and a sensing element. The volume of air 365 is connected to a pipe member 390 through a membrane 380, which allows the sensor to detect pressure without exposing internal components of the sensor to potentially damaging fluids within the plant atmosphere. The pressure sensitive material 355 within the GP sensor 340 can be the same as or similar to the pressure sensitive material 155 described above and can operate in the same or similar manner. As a comparison, the sensing element within the GP sensor 340 is configured to generate a signal indicating the amount of applied pressure relative to the pressure of the volume of air 365 (namely, the atmospheric pressure ($P_{atm}$) within the plant), yet the signal generated by the AP sensor 240 indicates the amount of applied pressure relative to the pressure in the vacuum 165 (namely, substantially zero pressure in a vacuum).

The processing circuitry 320 includes executable instructions stored in a machine-usable, computer-usable, or computer-readable medium in any of a variety of forms, wherein the instructions, when executed, cause the processing circuitry to perform pressure sensor dynamic drift detection and compensation. That is, the processing circuitry 320 is configured to determine the pressure ($P_{Process}$) of the industrial process using the pressure sensor measurements from the meter body through the communication interface 135. For each pressure sensor signal received from the meter body, the processing circuitry 320 can determine a pressure measurement by using that received pressure sensor signal. More particularly, the processing circuitry 320 can distinguish whether a pressure sensor measurement represents the pressure ($P_{Process}$) of the industrial process or represents a detected pressure drift detection condition. To make this distinction, the processing circuitry 320 selects the mode of the valve 215, and then determines pressure sensor measurement ($P_{process}$) of the industrial process using signals received from the sensing element of the GP sensor 340 while the valve 215 is in the process measuring mode, and determines pressure sensor measurements (*drift*) of the drift detection condition using signals received from the sensing element of the GP sensor 340 while the valve 215 is in the drift detection mode. The processing circuitry 320 can compare the determined pressure measurement ($P_{Process}$) of the industrial process to the determined pressure measurement (*drift*) of the drift detection condition. As described in more detail below, the processing circuitry 320 identifies whether drift has deteriorated accuracy of a pressure sensor based on the comparison. Further, the processing circuitry 320 obtains a corrected pressure measurement of the industrial process (namely, a drift-free true pressure measurement) by compensating deteriorated accuracy of the pressure sensor by a drift correction value.

The processing circuitry 320 can identify that drift within the GP sensor 340 has deteriorated the accuracy of the GP sensor 340 based on a drift correction value. The drift correction value represents an amount of inaccuracy of the measurements from the GP sensor 340. In light of the fact that the volume of air 365 is exposed to the plant atmospheric pressure ($P_{atm}$), it is reasonable to conclude that the pressure of the volume of air 365 is the same as the plant atmospheric pressure ($P_{atm}$). Accordingly, while in drift detection mode, any pressure measurement from the GP sensor 340 is attributable to drift within that sensor. As expressed in Equation 6, the processing circuitry 320 can determine the drift correction value to be the determined pressure measurement (*drift*) of the drift detection condition. In Equation 6, (*measured signal*) represents the pressure sensor measurement ($P_{atm}$) of the plant atmosphere using a signal received from the sensing element of the GP sensor 340 while the valve 215 is in the drift detection mode.

$$drift = measured\ signal \qquad\qquad (6)$$

The single GP sensor system 300 can compensate for the drift induced inaccuracy of the measurements from the GP sensor 340 by adjusting the pressure measurement (*GP*1) from the GP sensor 340 using the determined drift correction value. For example, the processing circuitry 320 can obtain a corrected process pressure measurement (GP(true)) by using Equation 7, which subtracts the drift correction value *(drift)* from the pressure measurement (*GP*1) of the GP sensor 340.

$$GP(true) = GP1 - drift \qquad\qquad (7)$$

Although FIGURE 3 illustrates one example of a single GP sensor system 300 with dynamic drift detection and compensation, various changes may be made to FIGURE 3. For example, the relative sizes, shapes, and dimensions of the various components shown in FIGURE 3 are for illustration only. Each component in FIGURE 3 could have any other size, shape, and dimensions.

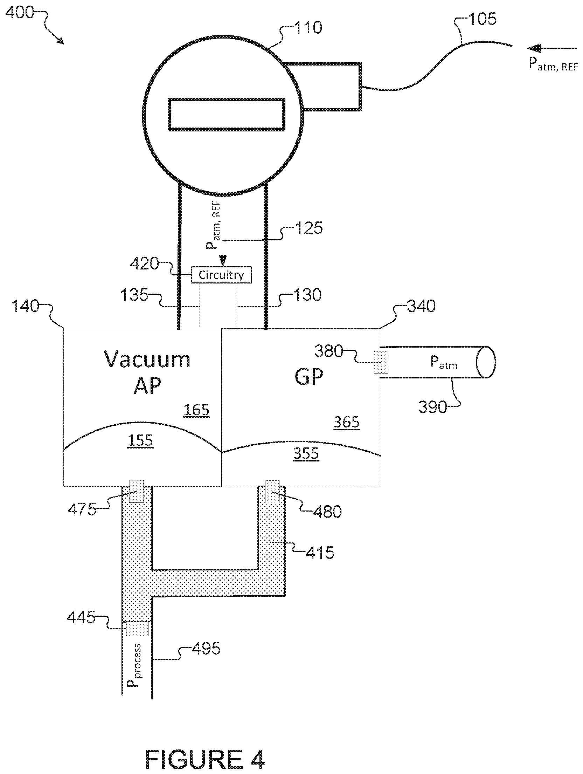

FIGURE 4 illustrates an example integrated gauge pressure (GP) and absolute pressure (AP) sensor with dynamic drift detection and compensation system 400 according to embodiments of the present disclosure.

The integrated GP and AP sensor system 400 includes an electronics housing 110, signal processing circuitry 420 enclosed within the electronics housing 110, and a meter body. That is, the integrated GP and AP sensor system 400 includes some components that are the same as or similar to the components used in the dual AP sensor system 100 of FIGURE 1.

The field wiring 105, electronics housing 110, communication interfaces 130 and 135, and the AP sensor 140 (including its sensing element and pressure sensitive material 155 in the vacuum 165) of FIGURE 1 could be used with the integrated GP and AP sensor system 400 of FIGURE 4. Additionally, the meter body components such as the GP sensor 340 (including its sensing element and pressure sensitive material 355 in the volume of air 365), membrane 380, and pipe member 390 of FIGURE 3 could be used with the integrated GP and AP sensor system 400 of FIGURE 4. These components 105, 110, 130, 135, 140, 155, 165, 340, 355, 365, 380, 390 can operate in the same or similar manner as described above. For example, the electronics housing 110 enables an enclosed processing circuitry 420 to receive data 125 from the field wiring 105. Accordingly, a detailed description of these components 105, 110, 130, 135, 140, 155, 165, 340, 355, 365, 380, 390 will not be duplicated in reference to FIGURE 4.

The meter body of the integrated GP and AP sensor system 400 connects to an industrial process, sends pressure sensor signals to the processing circuitry 420 via the communication interface 135 indicating a pressure ($P_{Process}$) of the industrial process relative to the vacuum 165 pressure as detected by the AP sensor 140 , and sends pressure sensor signals to the processing circuitry 420 via the communication interface 130 indicating a pressure ($P_{Process}$) of the industrial process relative to the atmospheric pressure ($P_{atm}$) within the plant as detected by the GP sensor 340. The AP sensor 140 senses a pressure ($P_{Process}$) of the industrial process through the membrane 475. Accordingly, the signals generated by the AP sensor 140 indicates the pressure ($P_{Process}$) of the industrial process applied relative to the pressure of the vacuum 165. In a similar manner, the GP sensor 340 senses a pressure ($P_{Process}$) of the industrial process through the membrane 480. The signals generated by the GP sensor 340 indicates the pressure ($P_{Process}$) of the industrial process applied relative to the plant atmospheric pressure ($P_{atm}$) within the volume of air 365. That is, in light of the fact that the volume of air 365 is exposed to the plant atmospheric pressure ($P_{atm}$), it is reasonable to conclude that the pressure of the volume of air 365 is the same as the plant atmospheric pressure ($P_{atm}$).

The meter body further includes a three-way split pipe 495 (for example ay-shaped pipe) that connects an industrial process to the GP sensor 340 and AP sensor 140 through a corresponding membrane 475, 480. More particularly, each of the three splits includes an opening that contains a membrane 445, 475, 480. The portion of the pipe 495 between the three membranes 445, 475, 480 is full of a fill fluid 415 that allows the GP sensor 340 and AP sensor 140 to detect pressure without exposing internal components of the AP sensor 140 to potentially damaging fluids within the industrial process. The membrane 445 is disposed between the industrial process and the fill fluid 415, thereby also isolating the fill fluid 415 from potentially damaging fluids within the industrial process.

The processing circuitry 420 is configured to perform pressure sensor dynamic drift detection and compensation. That is, the processing circuitry 420 is configured to determine the pressure ($P_{Process}$) of the industrial process using pressure sensor signals sent from the meter body through the communication interfaces 130, 135. The processing circuitry 420 can compare each of the determined pressure measurements ($P_{Process}$) of the industrial process to a reference atmospheric pressure measurement ($P_{atm_{ref}}$) or a pressure measurement of a drift detection condition. In FIGURE 4, the drift detection condition includes exposing the pressure sensitive material 355 within the GP sensor 340 to a stimulus (i.e., plant atmospheric pressure of the volume of air 365) that is different from the stimulus (i.e., pressure of the vacuum 165) to which the pressure sensitive material 155 of the AP sensor 140 is exposed and that is the same stimulus (i.e., plant atmospheric pressure of the pipe member 390) that is measured by the reference sensor. As described in more detail below, the processing circuitry 420 identifies whether drift has deteriorated accuracy of a pressure sensor based on the comparison. Further, the processing circuitry 420 obtains a corrected pressure measurement of the industrial process (namely, a drift-free true pressure measurement) by compensating deteriorated accuracy of the pressure sensor by a drift correction value.

For each pressure sensor signal received from the meter body, the processing circuitry 420 can determine a pressure measurement (e.g., $GP1$ or $AP1$) by using that received pressure sensor signal. More particularly, as expressed by Equation 8, the processing circuitry 420 can determine a pressure measurement ($P_{Process}$) of the industrial process in multiple ways: (i) the pressure measurement ($AP1$) of the industrial process using the pressure sensor signal from the AP sensor 140; or (ii) the pressure measurement ($GP1$) of the industrial process using the pressure sensor signal from the GP sensor 340 added to the atmospheric pressure ($P_{atm}$) within the plant. According to Equation 8, a second AP sensor (not shown) measures the atmospheric pressure ($P_{atm}$) within the plant, and the pressure sensor signals from the GP sensor 340 and AP sensor 140 are generated in parallel (i.e., at the same time).

$$P_{Process} = AP1 = GP1 + P_{atm} \qquad\qquad (8)$$

Note that the GP sensor 340, and the AP sensor 140 are composed from the same wafer, thus it is reasonable to conclude that both sensors exhibit the same drift characteristic, as expressed by Equations 9 and 10. Note that Equation 1 and 9 use a similar technique, namely concluding that the difference ($\Delta d$) between the amount of drift within sensors composed from the same wafer is substantially zero. Note that Equations 2 and 10 use a similar technique, namely exposing two sensors (i.e., one reference sensor known to be accurate and one non-reference sensor) to a single drift detection condition/stimulus (namely, the plant atmosphere) and determining that any difference between the two sensor measurements is attributable to drift within the non-reference sensor.

$$\Delta d = dgp - dap \cong 0 \qquad\qquad (9)$$

$$dgp = P_{atm_{ref}} - P_{atm} \qquad (10)$$

The processing circuitry 420 can identify that drift within the GP sensor 340 has deteriorated the accuracy of the GP sensor 340, and can similarly identify the same for drift within the AP sensor 140. That is, the processing circuitry 420 can determine a first drift correction value ($dap$), which represents an amount of inaccuracy of the measurements from the AP sensor 140 attributable to drift within the AP sensor 140. The processing circuitry 420 can determine a second drift correction value ($dgp$), which represents an amount of inaccuracy of the measurements from the GP sensor 340 attributable to drift within the GP sensor 340. The processing circuitry 420 can use Equation 10 to determine the second drift correction value ($dgp$).

As expressed in Equation 11, the first drift correction value ($dap$) is the amount of variance between the pressure measurement ($AP1$) of the industrial process using the pressure sensor signal from the AP sensor 140 and the actual industrial process pressure ($P_{Process}$). Also, Equation 11 expresses that without any drift ($dap$), the AP sensor 140 would indicate a true pressure measurement ($AP(true)$) equivalent to the actual industrial process pressure ($P_{Process}$) sensed.

$$AP1 = P_{Process} + dap = AP(true) + dap \qquad (11)$$

Equation 12 expresses that without any drift ($dgp$), the GP sensor 340 would indicate a drift-free true pressure measurement ($GP(true)$) equivalent to the actual industrial process pressure ($P_{Process}$) applied. As expressed in Equation 12, the second drift correction value ($dgp$) is the amount of variance between the pressure measurement ($GP1$) of the industrial process using the pressure sensor signal from the AP sensor 140 and the sum of the industrial process pressure ($P_{Process}$) added to the plant atmospheric pressure ($P_{atm}$).

$$GP1 = P_{Process} + dgp - P_{atm} = GP(true) + dgp \qquad (12)$$

Alternatively, the processing circuitry 420 can use Equation 13 to determine the second drift correction value ($dgp$). Equation 13 expresses that the second drift correction value ($dgp$) can be determined using signal generated from the GP sensor 340, the AP sensor 140, and a reference atmospheric pressure measurement ($P_{atm_{ref}}$).

$$dgp = GP1 - AP1 + P_{atm_{ref}} - \Delta d \qquad (13)$$

The processing circuitry 420 can use Equation 14 to determine a pressure measurement ($GP1$) using a signal generated by the GP sensor 340. In Equation 14, $P_{Process}$ represents the actual industrial process pressure.

$$GP1 = P_{Process} + (2 \times dgp) - P_{atm_{ref}} \qquad (14)$$

The processing circuitry 420 can use Equation 15 to determine a the value of the difference ($\Delta d$) between the amount of drift ($dgp$) within the GP sensor 340 and the amount of drift ($dap$) within the AP sensor 140 based on (i) the pressure measurement ($GP1$) determined using a second pressure sensor signal received from the GP sensor 340 via the communication interface 130, (ii) the pressure measurement ($AP1$) determined using a first pressure sensor signal received from the AP sensor 140 via the communication interface 135, and (iii) the data 125 including the reference atmospheric pressure measurement ($P_{atm_{ref}}$).

$$GP1 - AP1 + P_{atm_{ref}} = (2 \times dgp) - dap = dgp + \Delta d \qquad (15)$$

There are multiple ways for the processing circuitry 420 to obtain a corrected pressure measurement of the industrial process (namely, a drift-free true pressure measurement). According to one way, the processing circuitry 420 can compensate for deteriorated accuracy of the AP sensor 140 by using Equation 16. In this example, the AP sensor 140 can be calibrated over the temperature range of the plant, thereby including the temperature dependent hysteresis residual errors in the drift correction and enabling temperature independent performance.

$$AP(true) = AP1 - dap = AP1 - dgp - \Delta d$$
$$= 2AP1 - GP1 - P_{atm_{ref}} \qquad (16)$$

According to another way, the processing circuitry 420 can compensate for deteriorated accuracy of the GP sensor 340 by using Equation 17. In this example, the GP sensor 340 can be calibrated over the temperature range of the plant, thereby including the temperature dependent hysteresis residual errors in the drift correction and enabling temperature independent performance.

$$GP(true) = GP1 - dgp \cong AP1 - P_{atm_{ref}} \qquad (17)$$

Although FIGURE 4 illustrates one example of a dual AP sensor system 100 with dynamic drift detection and compensation, various changes may be made to FIGURE 4. For example, the relative sizes, shapes, and dimensions of the various components shown in FIGURE 4 are for illustration only. Each component in FIGURE 4 could have any other size, shape, and dimensions.

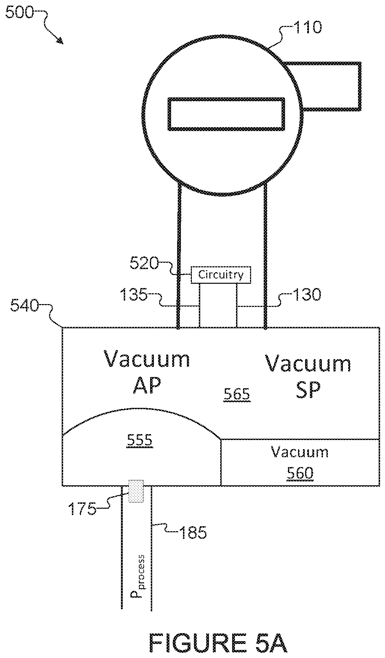

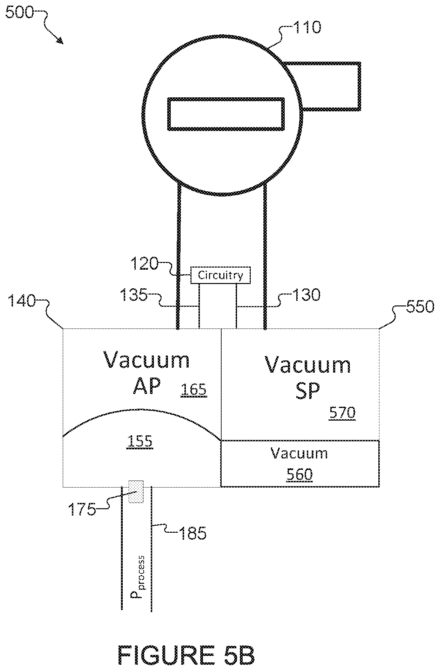

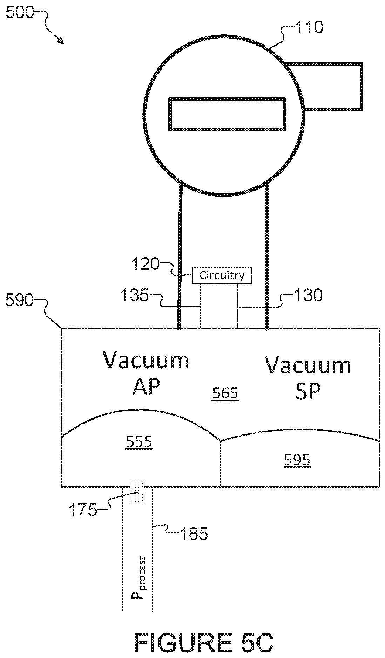

FIGURES 5A, 5B, and 5C illustrate an example low cost drift-free absolute pressure (AP) sensor system 500 with dynamic drift detection and compensation according to embodiments of the present disclosure.

The low cost drift-free AP sensor system 500 includes an electronics housing 110, signal processing circuitry 520 enclosed within the electronics housing 110, and a meter body. That is, the low cost drift-free AP sensor system 500 includes some components that are the same as or similar to the components used in the dual AP sensor system 100 of FIGURE 1.

The field wiring 105, electronics housing 110, communication interfaces 130 and 135, membrane 175, and pipe 185 of FIGURE 1 could be used with the low cost drift-free AP sensor system 500. These components 105, 110, 130, 135, 175, 185 can operate in the same or similar manner as described above. For example the electronics housing 110 forms an enclosure for the signal processing circuitry 520 and attaches to the meter body of the low cost drift-free AP sensor system 500. Accordingly, a detailed description of these components 105, 110, 130, 135, 175, 185 will not be duplicated in reference to FIGURES 5A-5C.

The meter body of the low cost drift-free AP sensor system 500 connects to an industrial process and sends pressure sensor signals to the processing circuitry 520 indicating a detected pressure ($P_{Process}$) of the industrial process and a detected pressure (drift(SP)) of drift. The meter body of the low cost drift-free AP sensor system 500 includes at least one sensor. In FIGURE 5A, the at least one sensor includes a single sensor 540 that includes a first pressure sensitive material 555 (which can be the same as or similar to the pressure sensitive material 155), a second pressure sensitive material 560 sealed in a vacuum in a box, and two sensing elements (i.e., one sensing element per pressure sensitive material) all contained within a vacuum 565. The first pressure sensitive material 555 is connected to an industrial process through the membrane 175 and pipe 185. The second pressure sensitive material 560 is not exposed to industrial process, and thus does not sense the pressure ($P_{process}$) of the industrial process. In FIGURES 5A-5C, the SP sensor 550 or sensing element corresponding to the second pressure sensitive material 560 can be calibrated over the temperature range of the plant, thereby including the temperature dependent hysteresis residual errors in the drift correction and enabling temperature independent performance.

The processing circuitry 520 is configured to perform pressure sensor dynamic drift detection and compensation. That is, the processing circuitry 520 is configured to determine the pressure ($P_{Process}$) of the industrial process using pressure sensor signals sent from the meter body through the communication interfaces 130, 135. The processing circuitry 520 can compare the determined pressure measurements ($P_{Process}$) of the industrial process to pressure measurement of a drift detection condition. As described in more detail below, the processing circuitry 520 identifies whether drift has deteriorated accuracy of a pressure sensor based on the comparison. Further, the processing circuitry 520 obtains a corrected pressure measurement of the industrial process (namely, a drift-free true pressure measurement) by compensating deteriorated accuracy of the pressure sensor by a drift correction value, as expressed in Equation 21.

In FIGURE 5A, the drift detection condition includes exposing the second pressure sensitive material 560 to no stimulus, thereby generating a pressure sensor signal representing an amount (drift(AP)) of inaccuracy of the measurements from the single sensor 540 attributable to drift within the sensor 540, as expressed in Equation 18.

$$SP1 = drift(SP) \qquad (18)$$

*SP1* should equal zero when no drift is within the sensor 540. Note that the pressure sensitive materials 555-560 are composed from the same wafer, thus it is reasonable to conclude that both exhibit the same drift characteristic, as expressed by Equation 19. Equation 19 also expresses that the difference ($\Delta drift$) between the drift (drift(AP)) within the first pressure sensitive material 555 and the drift (drift(SP)) within the second pressure sensitive material 560 is substantially zero.

$$\Delta drift = drift(AP) - drift(SP) = 0 \qquad (19)$$

The processing circuitry 520 determines the pressure measurement ($AP$1) of the industrial process using the signal generated by the sensing element corresponding to the first pressure sensitive material 555. As shown in Equation 20, the actual pressure ($P_{Process}$) of the industrial process can be expressed as the difference between the determined pressure measurement ($AP$1) of the industrial process and the drift (drift(AP)) within the sensor 540. Note that drift(AP)) within the first pressure sensitive material 555 represents the drift within the sensor 540 because the drift compensation is applicable to the pressure measurements from the sensing element corresponding to the first pressure sensitive material 555.

$$AP1 = P_{Process} - drift(AP) \qquad (20)$$

Equation 21 expresses that the drift-free true absolute pressure of the industrial process can be obtained by the difference between the determined pressure measurement ($AP$1) of the industrial process and the pressure measurement ($SP1$) determined by using the pressure sensor signal from the sensing element corresponding to the second pressure sensitive material 560.

$$AP(true) = AP1 - SP1 \qquad (21)$$

FIGURE 5B shows that two sensors 140 and 550 can operate in the same or similar way as the single sensor 540. As such, the at least one sensor includes the AP sensor 140 that detects the pressure ($P_{Process}$) of the industrial process and a seal pressure (SP) sensor 550 that detects pressure (drift(SP)) of drift within the pressure sensitive material 560 sealed in a vacuum in a box that is contained within a vacuum 570 (which can be the same as or similar to the vacuum 170).

In FIGURE 5C, the at least one sensor includes a single sensor 590 that includes a first pressure sensitive material 555 (which can be the same as or similar to the pressure sensitive material 155), a second pressure sensitive material 595 sealed at a fixed pressure ($P_f$), and two sensing elements (i.e., one sensing element per pressure sensitive material) all contained within a vacuum 565. The second pressure sensitive material 595 can be a sealed fluid.

The drift detection condition includes exposing the second pressure sensitive material 595 to no stimulus, thereby generating a pressure sensor signal representing an amount of inaccuracy of the measurements from the single sensor 590 attributable to drift within the sensor 540. The sensing element corresponding to the second pressure sensitive material 595 generates a pressure sensor signal representing a pressure relative to the fixed pressure ($P_f$), as expressed in Equations 22. Note that Equations 22 and 18 are similar.

$$SP1 = P_f + drift(SP) \qquad (22)$$

The processing circuitry 520 can use Equation 23 to perform compensation to obtain the drift-free true absolute pressure of the industrial process. $AP1$ represents the determined pressure measurement of the industrial process; $SP1$ represents the pressure measurement determined by using the pressure sensor signal from the sensing element corresponding to the second pressure sensitive material 595; $\Delta drift$ = 0 represents between the drift (drift(AP)) within the first pressure sensitive material 555 and the drift (drift(SP)) within the second pressure sensitive material 595; and $P_f$ represents the fixed pressure. Note that Equations 23 and 21 are similar.

$$AP(true) = AP1 - SP1 + P_f - \Delta drift$$
$$= AP1 - SP1 + P_f \qquad (23)$$

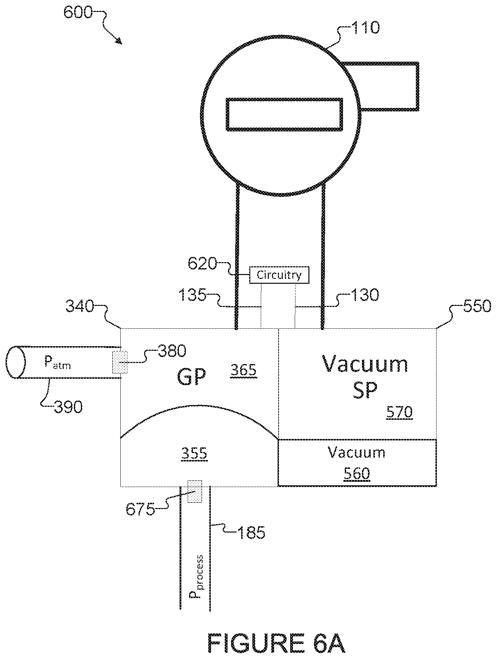

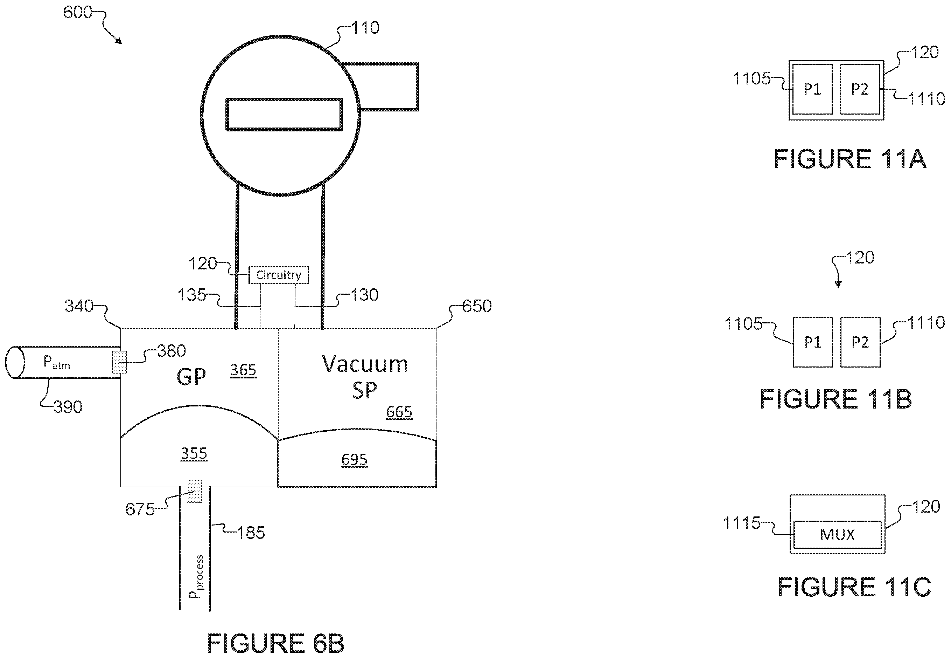

FIGURES 6A and 6B illustrate a low cost drift-free gauge pressure (GP) sensor system 600 with dynamic drift detection and compensation according to embodiments of the present disclosure.

The low cost drift-free GP sensor system 600 includes an electronics housing 110, signal processing circuitry 620 enclosed within the electronics housing 110, and a meter body. That is, the low cost drift-free GP sensor system 600 includes some components that are the same as or similar to the components used in the dual AP sensor system 100 of FIGURE 1.

The field wiring 105, electronics housing 110, communication interfaces 130 and 135, and pipe 185 of FIGURE 1 could be used with the low cost drift-free GP sensor system 600. Additionally, the sensor 340 (including its pressure sensitive material 355 in the volume of air 365), membrane 380, and pipe member 390 of FIGURE 3 could be used with the low cost drift-free GP sensor system 600. Further, the SP sensor 550 (including its pressure sensitive material 560 sealed in a vacuum in a box that is contained within the vacuum 570) of FIGURE 5B could be used with the low cost drift-free GP sensor system 600. These components 105, 110, 130, 135, 185, 340, 355, 365, 380, 390, 550 can operate in the same or similar manner as described above. For example the electronics housing 110 forms an enclosure for the signal processing circuitry 620 and attaches to the meter body of the low cost drift-free GP sensor system 600. Accordingly, a detailed description of these components 105, 110, 130, 135, 185, 340, 355, 365, 380, 390, 550 will not be duplicated in reference to FIGURES 6A and 6B.

The meter body of the low cost drift-free GP sensor system 600 connects to an industrial process and sends pressure sensor signals to the processing circuitry 620 indicating a detected pressure ($P_{Process}$) of the industrial process and a detected pressure (drift(SP)) of drift. The meter body of the low cost drift-free GP sensor system 600 includes at least one sensor, such as the GP sensor 340 that detects the pressure ($P_{Process}$) of the industrial process and the SP sensor 550 that detects that detects pressure (drift(SP)) of drift within the SP sensor 550. The GP sensor 340 is connected to an industrial process through the membrane 675 (which can be the same as or similar to the membrane 175) and pipe 185. The pressure sensitive material 560 is not exposed to the industrial process, and thus does not sense the pressure ($P_{process}$) of the industrial process. In FIGURE 6A, the SP sensor 550 can be calibrated over the temperature range of the plant, thereby including the temperature dependent hysteresis residual errors in the drift correction and enabling temperature independent performance.

The processing circuitry 620 is configured to perform pressure sensor dynamic drift detection and compensation. That is, the processing circuitry 620 is configured to determine the pressure ($P_{Process}$) of the industrial process using pressure sensor signals sent from the meter body through the communication interfaces 130, 135. The processing circuitry 620 can use Equation 24 to determine the pressure ($GP1$) of the industrial process using pressure sensor signal generated by the GP sensor 340, which is related to the actual pressure ($P_{Process}$) of the industrial process, the plant atmospheric pressure ($P_{atm}$), and the amount of drift ($drift(GP)$) within the GP sensor 340.

$$GP1 = P_{Process} - P_{atm} + drift(GP) \qquad (24)$$

The processing circuitry 620 can determine a pressure measurement of a drift detection condition using Equations 18 and 19. The processing circuitry 620 can compare the determined pressure measurements ($P_{Process}$) of the industrial process to the pressure measurement of a drift detection condition.

The processing circuitry 620 can use Equation 25 to perform compensation to obtain the drift-free true gauge pressure of the industrial process by the difference between the determined pressure measurement ($GP1$) of the industrial process and the pressure measurement ($SP1$) determined by using the SP sensor 550. Note that Equations 25 and 21 are similar.

$$GP(true) = GP1 - SP1 \qquad (25)$$

FIGURE 6B shows that the at least one sensor includes the GP sensor 340 and SP sensor 650. The SP sensor 650 includes a pressure sensitive material 695 (that is similar to the second pressure sensitive material 595) sealed at a fixed pressure ($P_f$) and a corresponding sensing element all contained within a vacuum 665. The second pressure sensitive material 695 can be a sealed fluid. In FIGURE 6B, the SP sensor 650 can be calibrated over the temperature range of the plant for the temperature expansion of the sealed fluid, thereby including the temperature dependent hysteresis residual errors in the drift correction and enabling temperature independent performance.

The drift detection condition includes exposing the SP sensor 650 to no stimulus, thereby generating a pressure sensor signal representing an amount of inaccuracy of the measurements from the SP sensor 650 or the GP sensor 340 attributable to drift. The sensing element of the SP sensor 650 generates a pressure sensor signal representing a pressure relative to the fixed pressure ($P_f$), as expressed in Equations 22.

The processing circuitry 620 can use Equation 26 to perform compensation to obtain the drift-free true absolute pressure of the industrial process. *GP1* represents the determined pressure measurement of the industrial process; *SP1* represents the pressure measurement determined by using the pressure sensor signal SP sensor 650; *Adrift* represents between the drift (drift(AP)) within the GP sensor 340 and the drift (drift(SP)) within the SP sensor 650; and Pf represents the fixed pressure. Note that Equations 26 and 21 are similar.

$$GP(true) = GP1 - SP1 + P_f \qquad (26)$$

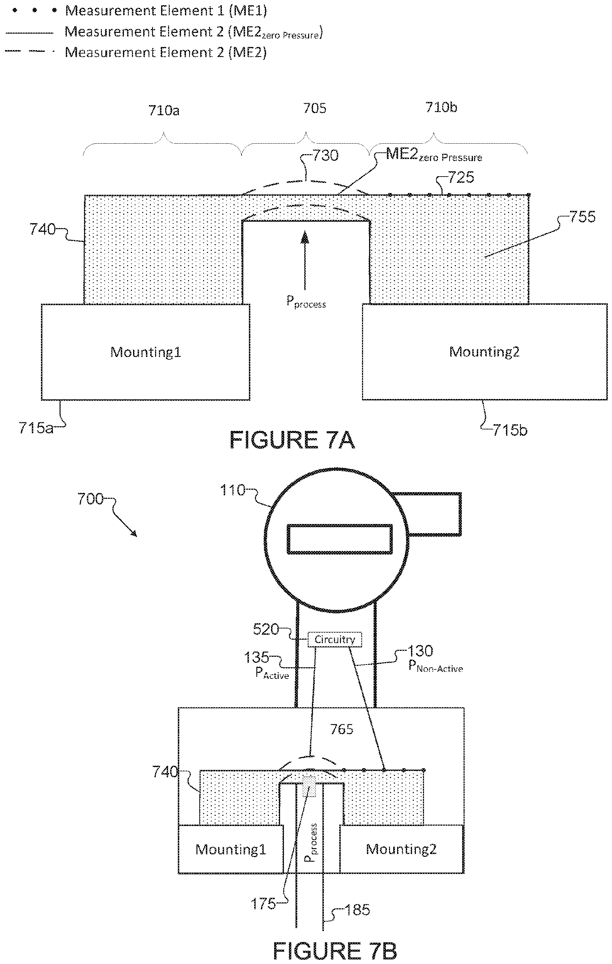

FIGURES 7A and 7B illustrate an example an active bridge sensor (ABS) with dynamic drift detection and compensation system 700 and its constituent active bridge sensor 740 according to embodiments of the present disclosure. FIGURE 7A illustrates the active bridge portion 705. FIGURE 7B illustrates the ABS sensor system 700.

The ABS sensor system 700 includes an electronics housing 110, signal processing circuitry 520 enclosed within the electronics housing 110, and a meter body. That is, the ABS sensor system 700 includes some components 110, 130, 135, 175, 185, 520, that are the same as or similar to the components used in the dual AP sensor system 100 of FIGURE 1 and the system 500 in FIGURES 5A-5C.

The meter body of the ABS sensor system 700 connects to an industrial process and sends pressure sensor signals to the processing circuitry 520 indicating a detected pressure ($P_{Process}$) of the industrial process and a detected pressure (drift(SP)) of drift. The meter body of the ABS sensor system 700 includes an active bridge sensor 740 that includes a pressure sensitive material 755 that has the form of an active bridge portion 705 between two non-active portions 710a-710b that are each mounted to a respective mounting 715a-715b. The pressure sensitive material 755 can be composed from a material as the pressure sensitive material 155. The active bridge sensor 740 includes a first sensing element 725 corresponding to the non-active portion 710b of pressure sensitive material, and a second sensing element 730 corresponding to the active bridge portion 705 of pressure sensitive material. The pressure sensitive material 755 and two sensing elements can be contained within a vacuum 765.

The active bridge portion 705 is connected to an industrial process through the membrane 175 and pipe 185. When the industrial process pressure ($P_{process}$) is substantially zero, the active bridge portion 705 does not rise or deform (shown as $ME2_{zero\ Pressure}$), and when the industrial process pressure ($P_{process}$) is non-zero, the active bridge portion 705 deforms by rising above the level of the non-active portions 710a-710b. More particularly, the active bridge portion 705 is configured to function similar to the first pressure sensitive material 555 within the single sensor 540. The non-active portions 710a-710b are not exposed to industrial process, and thus do not sense the pressure ($P_{process}$) of the industrial process. That is, the non-active portions 710a-710b are configured to function similar to the second pressure sensitive material 560. In FIGURES 7A-7B, the ABS sensor 740 can be calibrated over the temperature range of the plant, thereby including the temperature dependent hysteresis residual errors in the drift correction and enabling temperature independent performance.

The processing circuitry 520 is configured to perform pressure sensor dynamic drift detection and compensation by analogously applying Equations 18-21 to the signals received via the communication interfaces 130, 135 of the ABS sensor system 700. The processing circuitry 520 is configured to receive pressure sensor signals from the second sensing element 730 via the communication interface 135, and in response determine a pressure measurement of the industrial process. The processing circuitry 520 is configured to receive pressure sensor signals from the second sensing element 730 via the communication interface 130, and in response determine a pressure measurement of the drift detection condition, which represents an amount of inaccuracy of the measurements from the ABS sensor 740. As the active bridge and non-active portions 705, 710a-710b of the pressure sensitive material 755 are composed from the same wafer, it is reasonable to conclude that the entire pressure sensitive material 755 exhibits the same drift characteristic.

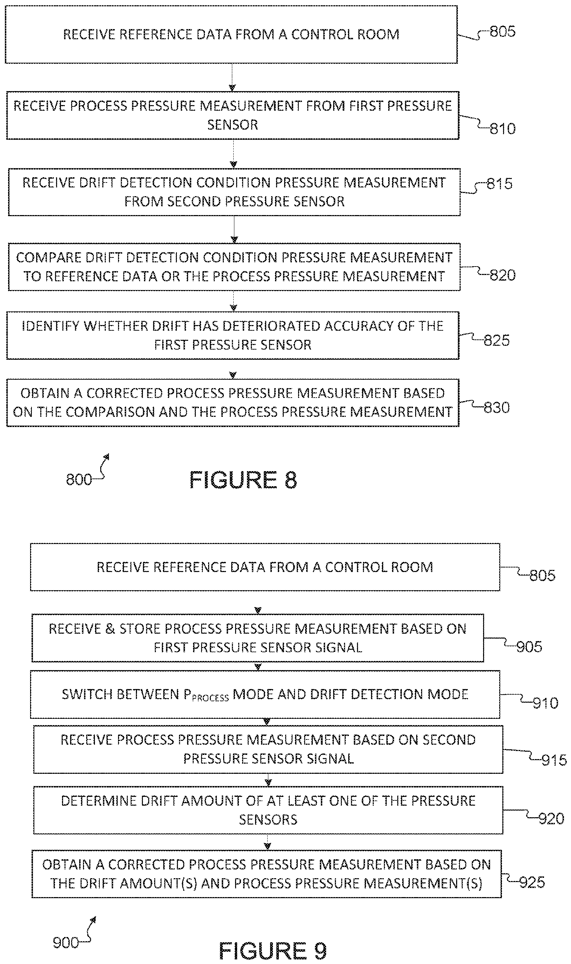

FIGURE 8 illustrates an example method 800 of dynamic drift detection and compensation using a dual absolute pressure (AP) sensor according to embodiments of the present disclosure. For ease of explanation, the method 800 will be described as being implemented by the dual AP sensor system 100.

In block 805, the processing device 120 receives reference data 125 from a control room. More particularly, the processing device 120 receives the reference data 125 from the high accuracy reference sensor. The reference data 125 includes an atmospheric pressure measurement ($P_{atm_{ref}}$) of an industrial facility (also referred to as a plant).

In block 810, the processing device 120 receives a first pressure sensor signal (indicating a process pressure measurement) from a sensing element within the AP sensor 140 via the communication interface 135. Upon receipt, the processing device 120 determines a pressure measurement of the industrial process using the first pressure sensor signal.

In block 815, the processing device 120 receives a second pressure sensor signal from a sensing element within the GP sensor 340 via the communication interface 130. Upon receipt, the processing device 120 determines a pressure measurement of the detection condition using the second pressure sensor signal.

In block 820, the processing device 120 compares the pressure measurement of the detection condition to the reference data 125. For example, the processing device 120 determines a difference between the pressure measurements determined using the second pressure sensor signal and the reference data 125, as expressed in Equation 2. In certain embodiments, the processing device (for example, processing device 420) can determine a difference between the pressure measurement determined using the second pressure sensor signal and between the pressure measurement determined using the first pressure sensor signal, as expressed in Equation 13.

In block 825, the processing device 120 identifies whether drift has deteriorated the accuracy of the AP sensor 140. For example, the processing device 120 can identify that deterioration has occurred when a specified amount of drift (e.g., non-zero) is present, such as in Equation 2 when the atmospheric pressure measurement ($P_{atm_{ref}}$) of the reference data 125 is different from the pressure measurement ($AP2$) determined using the second pressure sensor signal.

In block 830, the processing device 120 obtains a corrected process measurement based on the comparison within block 825 and the pressure measurement of the industrial process determined using the first pressure sensor signal. For example, the processing device 120 calculates a drift correction value (e.g., drift2) using Equation 2, and uses the calculated drift correction value in Equation 3 to obtain the corrected process measurement, namely, the true absolute pressure (AP(true)) of the industrial process.

FIGURE 9 illustrates a method 900 of dynamic drift detection and compensation using a single pressure sensor according to embodiments of the present disclosure. For ease of explanation, the method 900 will be described as being implemented by the single AP sensor system 200. The method begins at block 805 as described above, wherein the processing device 220 receives reference data 125 from a control room.

In block 905, the processing device 220 receives a first pressure sensor signal (indicating either a process pressure measurement or the plant atmospheric pressure) from a sensing element within the AP sensor 140 via the communication interface 135. Upon receipt while in the process measuring mode, the processing device 220 determines a pressure measurement of the industrial process using the first pressure sensor signal, and stores the determined pressure measurement ($AP1$). Alternatively, upon receipt while in the drift detection mode, the processing device 220 determines a pressure measurement of the drift detection condition (e.g., the atmospheric pressure ($P_{atm}$) within the plant) using the fist pressure sensor signal, and stores the determined pressure measurement ($AP1$).

In block 910, the processing device 220 switches between the two modes of the valve 215, namely the process measuring mode and the drift detection mode. More particularly, when the first pressure sensor signal (indicating a process pressure measurement) is received while in the process measuring mode, the processing device 220 switches from the process measuring mode to the drift detection mode. Alternatively, the processing device 220 switches from the drift detection mode to the process measuring mode when the first pressure sensor signal (indicating the plant atmospheric pressure) is received while in the drift detection mode.

In block 915, the processing device 220 receives a second pressure sensor signal from the AP sensor 140 via the communication interface 135. Similar to block 905, the processing device 220 uses the current mode to determine whether the second pressure sensor signal indicates a process pressure measurement or the plant atmospheric pressure. Upon receipt, the processing device 220 measures or otherwise determines the indicated pressure and stores that pressure measurement.

In block 920, the processing device 220 determines the amount of drift within the AP sensor 140, such as by using Equation 4. As an example, when the method 900 is implemented by the single GP sensor system 300, Equation 6 can be used to determine the amount of drift within the GP sensor 340.

In block 925, the processing device 220 performs compensation by obtaining a corrected process pressure measurement based on the determined drift amount of block 920 and the determined process pressure measurement stored in block 905 or 915. For example, the corrected process pressure measurement can be the drift-free true pressure ($AP1$) expressed in Equation 5. In an alternative embodiment, the corrected process pressure measurement can be the drift-free true pressure ($GP1$) expressed in Equation 7.

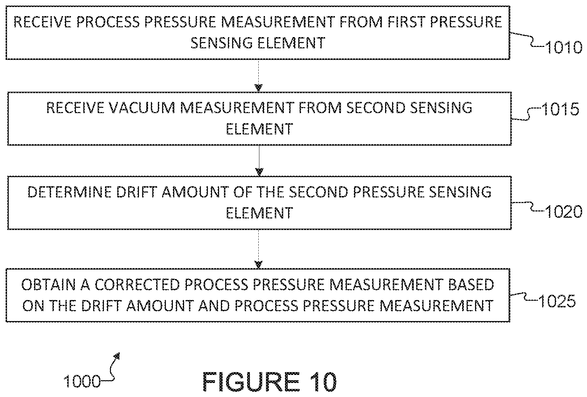

FIGURE 10 illustrates a method 1000 of dynamic drift detection and compensation using a drift-free sensor according to embodiments of the present disclosure. The drift free sensor can be a drift-free AP sensor (as shown in FIGURES 5A-5C), a drift-free GP sensor (as shown in FIGURE 6A), or a bridge sensor (as shown in FIGURES 7A-7B).

In block 1010, the processing device receives a pressure sensor signal from a first pressure sensing element that indicates a process pressure sensed.

In block 1015, the processing device receives a pressure sensor signal from a second pressure sensing element that indicates a pressure sensed corresponding to drift within the corresponding pressure sensitive material 560 or corresponding non-active portion 710b of pressure sensitive material.

In block 1020, the processing device determines the amount of drift of the second pressure sensing element, such as by using Equation 18.

In block 1025, the processing device obtains a corrected process pressure measurement based on the drift amount of block 1020 and the determined process pressure measurement of block 1010. For example, the processing device can use Equations 21, 23, or 25 to obtain the corrected process pressure measurement.

While FIGURES 8 through 10 each illustrate a series of steps, various steps in each figure could overlap, occur in parallel, or occur any number of times.

FIGURES 11A, 11B, and 11C illustrate examples of the processing circuitry 120 of FIGURE 1 according to embodiments of the present disclosure. In FIGURE 11A, the processing circuitry 120 includes a first processor 1105 and a second processor 1110 on a same printed circuit board (PCB). The first processor 1105 is configured to connect to the communication interface 135 and to determine the process pressure measurement using a first pressure sensor signal. The second processor 1110 is configured to connect to the communication interface 130 and to determine the pressure measurement (e.g., AP2) of the drift detection condition using a second pressure sensor signal.

In FIGURE 11B, the processing circuitry 120 includes the first processor 1105 on one PCB and includes the second processor 1110 on another PCB.

In FIGURE 11C, the processing circuitry 120 includes a multiplexer 1115 that includes an input configured to receive the first pressure sensor signal through the communication interface 135, and another input configured to receive the second pressure sensor signal through the communication interface 130. The processor within the processing circuitry 120 controls the multiplexer 1115 to selectively receive the first or second pressure sensor signal from the output of the multiplexer 1115.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

## Claims

1. A method comprising:

   generating (810), by at least a first pressure sensor (140), a first signal in response to sensing pressure of an industrial process;
   generating (815), by [[the]] at least a second pressure sensor (150), a second signal in response to sensing a drift detection condition of the plant atmosphere which is different from the pressure of the industrial process;
   determining (810) a pressure measurement ($P_{process}$) of the pressure of the industrial process using the first signal;
   determining (815) an atmospheric pressure measurement ($P_{atm}$) of the drift detection condition using the second signal;
   comparing (820) the pressure measurement of the drift detection condition to one of: the pressure measurement of the process or a reference value (125); and
   identifying (825), by at least one processing device (120), whether drift has deteriorated accuracy of the at least first or second pressure sensors based on the comparison, wherein the identifying includes the step of:

      dynamically detecting a drift by periodically measuring an amount of the drift within the at least second pressure sensor;

determining drift ($drift2$) by calculating the difference between at least one of the pressure measurement or the drift detection condition and the atmospheric pressure measurement of the reference value.

2. The method of claim 1, further comprising:
obtaining (830) a corrected process pressure measurement by subtracting a drift correction value from the determined pressure measurement of the pressure of the industrial process, the drift correction value based on the comparison.

3. The method of claim 2, further comprising calculating (830) the drift correction value as a difference between the pressure measurement of the pressure of the industrial process and the reference value.

4. The method of claim 2, wherein the drift correction value is equal to the atmospheric pressure measurement of the drift detection condition.

5. The method of claim 1, wherein the at least one pressure sensor comprises:

a first sensing element configured to generate the first signal in response to sensing the pressure of the industrial process, and
a second sensing element configured to generate the second signal in response to sensing the drift detection condition.

6. The method of claim 5, further comprising:
selecting (910) to receive either the first signal from the first sensing element or the second signal from the second sensing element.

7. A system comprising:

at least one pressure sensor (140) configured to generate a first signal in response to sensing pressure of an industrial process and generate a second signal in response to sensing a drift detection condition of the plant atmosphere which is different from the pressure of the industrial process; and
at least one processing device (120) configured to:

determine a pressure measurement of the pressure of the industrial process using the first signal;
determine an atmospheric pressure measurement ($P_{atm}$) of the drift detection condition using the second signal;
compare the pressure measurement of the drift detection condition to one of: the pressure measurement of the process or a reference value; and
identify whether drift has deteriorated accuracy of the at least first or second pressure sensors based on the comparison, wherein the identify includes the step of:

dynamically detect a drift by periodically measuring an amount of the drift within the at least second pressure sensor;
determine drift ($drift2$) by calculating the difference between at least one of the pressure measurement or the drift detection condition and the atmospheric pressure measurement of the reference value.

8. The system of claim 7, wherein the at least one processing device is further configured to:
obtain a corrected process pressure measurement by subtracting a drift correction value from the pressure measurement of the pressure of the industrial process, the drift correction value based on the comparison.

9. The system of claim 7, wherein the at least one sensor comprises:

a first sensing element configured to generate the first signal in response to sensing the pressure of the industrial process, and
a second sensing element configured to generate the second signal in response to sensing the drift detection condition.

10. The system of claim 9, wherein the at least one processing device comprises:
a multiplexer (1115) coupled to each sensing element of the at least one sensor and configured to select to receive either the first signal from the first sensing element or the second signal from the second sensing element.

**11.** An apparatus comprising:
at least one processing device (120) configured to:

receive first and second signals from at least first or second pressure sensors, the first signal representing a pressure from sensing pressure of an industrial process, the second signal representing a pressure from sensing a drift detection condition of the plant atmosphere which is different from the pressure of the industrial process; determine a pressure measurement ($P_{process}$) of the pressure of the industrial process using the first signal; determine an atmospheric pressure measurement ($P_{atm}$) of the drift detection condition using the second signal; compare the pressure measurement of the drift detection condition to one of: the pressure measurement of the process or a reference value (125); and
identify whether drift has deteriorated accuracy of the at least first or second pressure sensors based on the comparison, wherein the identify includes the step of:

dynamically detect a drift by periodically measuring an amount of the drift within the at least second pressure sensor;
determine drift (*drift*2) by calculating the difference between at least one of the pressure measurement or the drift detection condition and the atmospheric pressure measurement of the reference value.

**12.** The apparatus of claim 11, wherein the at least one processing device is further configured to:
obtain a corrected process pressure measurement by subtracting a drift correction value from the pressure measurement of the pressure of the industrial process, the drift correction value based on the comparison.

**13.** The apparatus of claim 12, wherein the at least one processing device is further configured to calculate the drift correction value as a difference between the pressure measurement of the process and the reference value.

**14.** The apparatus of claim 12, wherein the drift correction value is equivalent to the atmospheric pressure measurement of the drift detection condition.

**15.** The apparatus of claim 11, wherein the at least one processing device is further configured to:

receive the first signal from a first sensing element that is configured to generate the first signal in response to sensing the process relative to a vacuum, and
receive the second signal from a second sensing element that is configured to generate a second signal in response to sensing the drift detection condition as one of:

an atmospheric pressure relative to a vacuum,
the process relative to the atmospheric pressure,
a seal pressure of a fluid sealed at a fixed pressure relative to a vacuum, or
a seal pressure of silicon in a vacuum sealed box relative to a vacuum.

**Patentansprüche**

**1.** Verfahren, umfassend:

Erzeugen (810) eines ersten Signals als Reaktion auf das Abfühlen des Drucks eines industriellen Prozesses durch mindestens einen ersten Drucksensor (140);
Erzeugen (815) eines zweiten Signals als Reaktion auf das Abfühlen eines Drifterkennungszustands der Anlagenatmosphäre, der sich vom Druck des industriellen Prozesses unterscheidet, durch [[den]] mindestens einen zweiten Drucksensor (150);
Bestimmen (810) einer Druckmessung ($P_{Prozess}$) des Drucks des industriellen Prozesses unter Verwendung des ersten Signals;
Bestimmen (815) einer Atmosphärendruckmessung ($P_{atm}$) des Drifterkennungszustands unter Verwendung des zweiten Signals;
Vergleichen (820) der Druckmessung des Drifterkennungszustands mit einem von Folgendem: der Druckmessung des Prozesses oder einem Referenzwert (125); und
Identifizieren (825) durch mindestens eine Verarbeitungsvorrichtung (120), ob die Drift die Genauigkeit des mindestens ersten oder zweiten Drucksensors basierend auf dem Vergleich verschlechtert hat, wobei das Identifizieren den Schritt einschließt:

dynamisches Erkennen einer Drift durch periodisches Messen eines Betrags der Drift innerhalb des mindestens zweiten Drucksensors;

Bestimmen der Drift (*Drift*2) durch Berechnen der Differenz zwischen mindestens einem von der Druckmessung oder dem Drifterkennungszustand und der Atmosphärendruckmessung des Referenzwerts.

2. Verfahren nach Anspruch 1, ferner umfassend:
Erhalten (830) einer korrigierten Verfahrensdruckmessung durch Subtrahieren eines Driftkorrekturwerts von der bestimmten Druckmessung des Drucks des industriellen Prozesses, wobei der Driftkorrekturwert auf dem Vergleich basiert.

3. Verfahren nach Anspruch 2, ferner umfassend das Berechnen (830) des Driftkorrekturwerts als Differenz zwischen der Druckmessung des Drucks von dem industriellen Prozesses und dem Referenzwert.

4. Verfahren nach Anspruch 2, wobei der Driftkorrekturwert gleich der Atmosphärendruckmessung des Drifterkennungszustands ist.

5. Verfahren nach Anspruch 1, wobei der mindestens eine Drucksensor umfasst:
ein erstes Abfühlelement, das konfiguriert ist, um das erste Signal als Reaktion auf das Abfühlen des Drucks des industriellen Prozesses zu erzeugen, und
ein zweites Abfühlelement, das konfiguriert ist, um das zweite Signal als Reaktion auf das Abfühlen des Drifterkennungszustands zu erzeugen.

6. Verfahren nach Anspruch 5, ferner umfassend:
Auswählen (910), um entweder das erste Signal vom ersten Abfühlelement oder das zweite Signal vom zweiten Abfühlelement zu empfangen.

7. System, umfassend:

mindestens einen Drucksensor (140), der konfiguriert ist, um ein erstes Signal als Reaktion auf den Abfühldruck eines industriellen Prozesses zu erzeugen und um ein zweites Signal als Reaktion auf das Abfühlen eines Drifterkennungszustands der Anlagenatmosphäre zu erzeugen, der sich vom Druck des industriellen Prozesses unterscheidet; und

mindestens eine Verarbeitungsvorrichtung (120), konfiguriert zum:

Bestimmen einer Druckmessung des Drucks des industriellen Prozesses unter Verwendung des ersten Signals;

Bestimmen einer Atmosphärendruckmessung ($P_{atm}$) des Drifterkennungszustands unter Verwendung des zweiten Signals;

Vergleichen der Druckmessung des Drifterkennungszustands mit einem von Folgendem: der Druckmessung des Prozesses oder einem Referenzwert; und

Identifizieren, ob die Drift die Genauigkeit des mindestens ersten oder zweiten Drucksensors basierend auf dem Vergleich verschlechtert hat, wobei das Identifizieren den Schritt einschließt:

dynamisches Erkennen einer Drift durch periodisches Messen eines Betrags der Drift innerhalb des mindestens zweiten Drucksensors;

Bestimmen der Drift (*Drift*2) durch Berechnen der Differenz zwischen mindestens einem von der Druckmessung oder dem Drifterkennungszustand und der Atmosphärendruckmessung des Referenzwerts.

8. System nach Anspruch 7, wobei die mindestens eine Verarbeitungsvorrichtung ferner konfiguriert ist zum:
Erhalten einer korrigierten Verfahrensdruckmessung durch Subtrahieren eines Driftkorrekturwerts von der Druckmessung des Drucks des industriellen Prozesses, wobei der Driftkorrekturwert auf dem Vergleich basiert.

9. System nach Anspruch 7, wobei der mindestens eine Sensor umfasst:

ein erstes Abfühlelement, das konfiguriert ist, um das erste Signal als Reaktion auf das Abfühlen des Drucks des industriellen Prozesses zu erzeugen, und

ein zweites Abfühlelement, das konfiguriert ist, um das zweite Signal als Reaktion auf das Abfühlen des Drifterkennungszustands zu erzeugen.

10. System nach Anspruch 9, wobei die mindestens eine Verarbeitungsvorrichtung umfasst:
einen Multiplexer (1115), der mit jedem Abfühlelement des mindestens einen Sensors gekoppelt und konfiguriert ist, um auszuwählen, dass entweder das erste Signal vom ersten Abfühlelement oder das zweite Signal vom zweiten Abfühlelement empfangen wird.

11. Apparatur, umfassend:
mindestens eine Verarbeitungsvorrichtung (120), konfiguriert zum:

Empfangen des ersten und zweiten Signals von mindestens dem ersten oder zweiten Drucksensor, wobei das erste Signal einen Druck vom Abfühlen des Drucks eines industriellen Prozesses darstellt, das zweite Signal einen Druck vom Abfühlen eines Drifterkennungszustands der Anlagenatmosphäre darstellt, der sich vom Druck des industriellen Prozesses unterscheidet;
Bestimmen einer Druckmessung ($P_{Prozess}$) des Drucks des industriellen Prozesses unter Verwendung des ersten Signals;
Bestimmen einer Atmosphärendruckmessung ($P_{atm}$) des Drifterkennungszustands unter Verwendung des zweiten Signals;
Vergleichen der Druckmessung des Drifterkennungszustands mit einem von Folgendem: der Druckmessung des Prozesses oder einem Referenzwert (125); und
Identifizieren, ob die Drift die Genauigkeit des mindestens ersten oder zweiten Drucksensors basierend auf dem Vergleich verschlechtert hat, wobei das Identifizieren den Schritt einschließt:

dynamisches Erkennen einer Drift durch periodisches Messen eines Betrags der Drift innerhalb des mindestens zweiten Drucksensors;
Bestimmen der Drift (*Drift2*) durch Berechnen der Differenz zwischen mindestens einem von der Druckmessung oder dem Drifterkennungszustand und der Atmosphärendruckmessung des Referenzwerts.

12. Apparatus nach Anspruch 11, wobei die mindestens eine Verarbeitungsvorrichtung ferner konfiguriert ist zum:
Erhalten einer korrigierten Verfahrensdruckmessung durch Subtrahieren eines Driftkorrekturwerts von der Druckmessung des Drucks des industriellen Prozesses, wobei der Driftkorrekturwert auf dem Vergleich basiert.

13. Vorrichtung nach Anspruch 12, wobei die mindestens eine Verarbeitungsvorrichtung ferner konfiguriert, um den Driftkorrekturwert als Differenz zwischen der Druckmessung des Prozesses und dem Referenzwert zu berechnen.

14. Apparatus nach Anspruch 12, wobei der Driftkorrekturwert gleich der Atmosphärendruckmessung des Drifterkennungszustands ist.

15. Apparatus nach Anspruch 11, wobei die mindestens eine Verarbeitungsvorrichtung ferner konfiguriert ist zum:

Empfangen des ersten Signals von einem ersten Abfühlelement, das konfiguriert ist, um das erste Signal als Reaktion auf das Abfühlen des Prozesses relativ zu einem Vakuum zu erzeugen, und
Empfangen des zweiten Signals von einem zweiten Abfühlelement, das konfiguriert ist, um ein zweites Signal als Reaktion auf das Abfühlen des Drifterkennungszustands zu erzeugen, als eines von:

einen Atmosphärendruckmessung relativ zu einem Vakuum,
dem Prozess relativ zum Atmosphäriendruck,
einem Dichtungsdruck eines Fluids, das bei einem festen Druck relativ zu einem Vakuum versiegelt ist,
oder einem Dichtungsdruck von Silicium in einem vakuumversiegelten Kasten relativ zu einem Vakuum.

**Revendications**

1. Procédé comprenant :

la production (810), par au moins un premier capteur de pression (140), d'un premier signal en réponse à la détection de la pression d'un processus industriel ;

la production (815), par l'au moins un second capteur de pression (150), d'un second signal en réponse à la détection d'une condition de détection de dérive de l'atmosphère de l'installation, qui est différente de la pression du processus industriel ;

la détermination (810) d'une mesure de pression ($P_{processus}$) de la pression du processus industriel grâce au premier signal ;

la détermination (815) d'une mesure de pression atmosphérique ($P_{atm}$) de la condition de détection de dérive grâce au second signal ;

la comparaison (820) de la mesure de pression de la condition de détection de dérive à un élément parmi : la mesure de pression du processus ou une valeur de référence (125) ; et

l'identification (825), par au moins un dispositif de traitement (120), si la dérive a dégradé la précision de l'au moins un premier ou second capteur de pression, en fonction de la comparaison, l'identification comprenant l'étape suivante :

détection dynamique d'une dérive par mesure périodique d'une quantité de la dérive à l'intérieur de l'au moins un second capteur de pression ;

détermination de la dérive (*drift*2) par calcul de la différence entre au moins un de la mesure de pression ou de la condition de détection de dérive et la mesure de pression atmosphérique de la valeur de référence.

2.  Procédé selon la revendication 1, comprenant en outre :

l'obtention (830) d'une mesure de pression de processus corrigée par soustraction d'une valeur de correction de dérive de la mesure déterminée de pression de la pression du processus industriel, la valeur de correction de dérive étant fondée sur la comparaison.

3.  Procédé selon la revendication 2, comprenant en outre le calcul (830) de la valeur de correction de dérive en tant que différence entre la mesure de pression de la pression du processus industriel et la valeur de référence.

4.  Procédé selon la revendication 2, dans lequel la valeur de correction de dérive est égale à la mesure de pression atmosphérique de la condition de détection de dérive.

5.  Procédé selon la revendication 1, dans lequel l'au moins un capteur de pression comprend :
un premier élément de détection, configuré pour générer le premier signal en réponse à la détection de la pression du processus industriel et
un second élément de détection, configuré pour générer le second signal en réponse à la détection de la condition de détection de dérive.

6.  Procédé selon la revendication 5, comprenant en outre :
la sélection (910) permettant de recevoir soit le premier signal du premier élément de détection, soit le second signal du second élément de détection.

7.  Système comprenant :

au moins un capteur de pression (140) configuré pour générer un premier signal en réponse à la détection de la pression d'un processus industriel et pour générer un second signal en réponse à la détection d'une condition de détection de dérive de l'atmosphère de l'installation, qui diffère de la pression du processus industriel ; et
au moins un dispositif de traitement (120), configuré pour :

déterminer une mesure de pression de la pression du processus industriel grâce au premier signal ;
déterminer une mesure de pression atmosphérique ($P_{atm}$) de la condition de détection de dérive grâce au second signal ;
comparer la mesure de pression de la condition de détection de dérive à un élément parmi : la mesure de pression du processus ou une valeur de référence ; et
identifier si la dérive a dégradé la précision de l'au moins un premier ou second capteur de pression en fonction de la comparaison, l'identification comprenant l'étape suivante :

détection dynamique d'une dérive par mesure périodique d'une quantité de la dérive à l'intérieur de l'au moins un second capteur de pression ;
détermination de la dérive (*drift*2) par calcul de la différence entre au moins un de la mesure de pression ou de la condition de détection de dérive et la mesure de pression atmosphérique de la valeur de référence.

8. Système selon la revendication 7, dans lequel l'au moins un dispositif de traitement est en outre configuré pour :
obtenir une mesure de pression de processus corrigée par soustraction d'une valeur de correction de dérive de la mesure de pression de la pression du processus industriel, la valeur de correction de dérive étant basée sur la comparaison.

9. Système selon la revendication 7, l'au moins un capteur comprenant :

un premier élément de détection, configuré pour générer le premier signal en réponse à la détection de la pression du processus industriel et
un second élément de détection, configuré pour générer le second signal en réponse à la détection de la condition de détection de dérive.

10. Système selon la revendication 9, l'au moins un dispositif de traitement comprenant :
un multiplexeur (1115) couplé à chaque élément de détection de l'au moins un capteur et configuré pour sélectionner pour recevoir soit le premier signal du premier élément de détection, soit le second signal du second élément de détection.

11. Appareil comprenant :
au moins un dispositif de traitement (120), configuré pour :

recevoir des premier et second signaux d'au moins un premier ou un second capteur de pression, le premier signal représentant une pression provenant de la détection de la pression d'un processus industriel, le second signal représentant une pression provenant de la détection d'une condition de détection de dérive de l'atmosphère de l'installation, qui diffère de la pression du processus industriel ;
déterminer une mesure de pression ($P_{processus}$) de la pression du processus industriel en utilisant le premier signal ;
déterminer une mesure de pression atmosphérique ($P_{atm}$) de la condition de détection de dérive grâce au second signal ;
comparer la mesure de pression de la condition de détection de dérive à un élément parmi : la mesure de pression du processus ou une valeur de référence (125) ; et
identifier si la dérive a dégradé la précision de l'au moins un premier ou second capteur de pression en fonction de la comparaison, l'identification comprenant l'étape suivante :

détection dynamique d'une dérive par mesure périodique d'une quantité de la dérive à l'intérieur de l'au moins un second capteur de pression ;
détermination de la dérive (*drift*2) par calcul de la différence entre au moins un de la mesure de pression ou de la condition de détection de dérive et la mesure de pression atmosphérique de la valeur de référence.

12. Appareil selon la revendication 11, dans lequel l'au moins un dispositif de traitement est en outre conçu pour :
obtenir une mesure de pression de processus corrigée par soustraction d'une valeur de correction de dérive de la mesure de pression de la pression du processus industriel, la valeur de correction de dérive étant basée sur la comparaison.

13. Appareil selon la revendication 12, dans lequel l'au moins un dispositif de traitement est en outre configuré pour calculer la valeur de correction de dérive sous forme d'une différence entre la mesure de pression du processus et la valeur de référence.

14. Appareil selon la revendication 12, dans lequel la valeur de correction de dérive est équivalente à la mesure de pression atmosphérique de la condition de détection de dérive.

15. Appareil selon la revendication 11, dans lequel l'au moins un dispositif de traitement est en outre conçu pour :

recevoir le premier signal d'un premier élément de détection qui est configuré pour générer le premier signal en réponse à la détection du processus par rapport à un vide et
recevoir le second signal d'un second élément de détection qui est configuré pour générer un second signal en réponse à la détection de la condition de détection de dérive sous l'une des formes suivantes :

une pression atmosphérique par rapport à un vide,

le processus par rapport à la pression atmosphérique,

une pression d'étanchéité d'un fluide scellé à une pression fixe par rapport à un vide

ou une pression de scellage du silicium dans une boîte scellée sous vide par rapport à un vide.

EP 3 391 003 B1

FIGURE 1

23

200

110

105

$P_{atm, REF}$

$P_{atm, REF}$

125

220

Circuitry

135

140

Vacuum
AP

165

155

275

285

215

$P_{atm}$

290

245

295

$P_{process}$

FIGURE 2

300

110

320 Circuitry

135

340

380

GP

$P_{atm}$

390

365

355

275

285

215 $P_{atm}$

290

245

295

$P_{process}$

FIGURE 3

400

110

105

$P_{atm, REF}$

$P_{atm, REF}$

125

420

Circuitry

135

130

140

340

380

Vacuum
AP

GP

$P_{atm}$

390

165

365

155

355

475

480

415

445

495

$P_{process}$

FIGURE 4

EP 3 391 003 B1

FIGURE 5A

500

110

120 Circuitry

135 130

140 550

Vacuum
AP 165

Vacuum
SP

570

155 Vacuum

560

175

185

P_process

FIGURE 5B

FIGURE 5C

600

110

620 Circuitry

135 130

340 550

$P_{atm}$ 380

390

GP 365 Vacuum SP

570

355 Vacuum

560

675

185

$P_{process}$

## FIGURE 6A

FIGURE 11A

FIGURE 11B

FIGURE 11C

FIGURE 6B

• • • Measurement Element 1 (ME1)
———————— Measurement Element 2 (ME2$_{zero\ Pressure}$)
— — · Measurement Element 2 (ME2)

710a          705          710b

730     ME2$_{zero\ Pressure}$
725

740

755

P$_{process}$

Mounting1          Mounting2

715a          715b

# FIGURE 7A

700

110

520          Circuitry
135          130
P$_{Active}$          P$_{Non\text{-}Active}$

765

740

Mounting1     P$_{process}$     Mounting2

175          185

# FIGURE 7B

RECEIVE REFERENCE DATA FROM A CONTROL ROOM ──805

RECEIVE PROCESS PRESSURE MEASUREMENT FROM FIRST PRESSURE SENSOR ──810

RECEIVE DRIFT DETECTION CONDITION PRESSURE MEASUREMENT FROM SECOND PRESSURE SENSOR ──815

COMPARE DRIFT DETECTION CONDITION PRESSURE MEASUREMENT TO REFERENCE DATA OR THE PROCESS PRESSURE MEASUREMENT ──820

IDENTIFY WHETHER DRIFT HAS DETERIORATED ACCURACY OF THE FIRST PRESSURE SENSOR ──825

OBTAIN A CORRECTED PROCESS PRESSURE MEASUREMENT BASED ON THE COMPARISON AND THE PROCESS PRESSURE MEASUREMENT ──830

800

# FIGURE 8

RECEIVE REFERENCE DATA FROM A CONTROL ROOM ──805

RECEIVE & STORE PROCESS PRESSURE MEASUREMENT BASED ON FIRST PRESSURE SENSOR SIGNAL ──905

SWITCH BETWEEN $P_{PROCESS}$ MODE AND DRIFT DETECTION MODE ──910

RECEIVE PROCESS PRESSURE MEASUREMENT BASED ON SECOND PRESSURE SENSOR SIGNAL ──915

DETERMINE DRIFT AMOUNT OF AT LEAST ONE OF THE PRESSURE SENSORS ──920

OBTAIN A CORRECTED PROCESS PRESSURE MEASUREMENT BASED ON THE DRIFT AMOUNT(S) AND PROCESS PRESSURE MEASUREMENT(S) ──925

900

# FIGURE 9

RECEIVE PROCESS PRESSURE MEASUREMENT FROM FIRST PRESSURE SENSING ELEMENT — 1010

RECEIVE VACUUM MEASUREMENT FROM SECOND SENSING ELEMENT — 1015

DETERMINE DRIFT AMOUNT OF THE SECOND PRESSURE SENSING ELEMENT — 1020

OBTAIN A CORRECTED PROCESS PRESSURE MEASUREMENT BASED ON THE DRIFT AMOUNT AND PROCESS PRESSURE MEASUREMENT — 1025

1000

# FIGURE 10

**EP 3 391 003 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140165692 A1